# FASCICULE DE BREVET EUROPEEN

(11) **EP 0 669 179 B1**
(45) Date de publication et mention de la délivrance du brevet: **23.10.2002**
(21) Numéro de dépôt: 95102212.8
(22) Date de dépôt: 17.02.1995
(51) Int. Cl.: B23D 15/04

(54) **Cisaille mécanique pour la coupe à chaud de billettes ou barres métalliques**
Mechanische Schere zum Warmschneiden von Knüppeln oder Metallstangen
Mechanical shears for hot-cutting of slabs or metal bars

(30) Priorité: 24.02.1994 IT VI940029
(43) Date de publication de la demande: 30.08.1995
(73) Titulaire: BIFRANGI S.p.A., I-36065 Mussolente (Vicenza) (IT)
(72) Inventeur: Biasion, Francesco, I-36065 Mussolente (Vicenza) (IT)
(74) Mandataire: Bettello, Luigi, Dott. Ing.

(56) Documents cités:
- DE-A- 1 550 875
- DE-U- 7 603 162
- FR-A- 522 134
- US-A- 4 141 395
- US-A- 4 223 707

## Description

La présente invention a trait à une cisaille mécanique selon le préambule de la revendication 1 et comme connu du document FR-A-522 134. Des telles cisailles sont utilisées dans les opérations de coupe pour le forgeage et le matriçage à chaud de billettes ou barres métalliques à section ronde ou carrée.

Les cisailles de ce type connues en pratique sont à commande oléodynamique et présentent les inconvénients suivants :
a) un risque élevé d'incendie du fluide oléodynamique, ce qui nécessite la prise de mesures de protection particulières.
b) une consommation d'énergie élevée, non proportionnelle au travail effectivement réalisé (il suffit de mentionner la nécessité d'avoir recours à un poste de chauffage de l'huile équipé d'échangeurs d'huile et d'eau, ainsi que de résistances de chauffage pour des quantités de presque 2 000 litres) ;
c) les fuites considérables et continues d'huile inévitables dans ces installations, représentant un risque de pollution et un doublement du coût à cause de la récupération et de la destruction de l'huile usée ;
d) un niveau de bruit élevé des machines ;
e) un encombrement important des tuyauteries de liaison entre la machine et la centrale oléodynamique.

La présente invention a pour but de remédier aux inconvénients précités et elle a pour objet la cisaille mécanique qui est définie à la revendication 1.

En fait l'invention consiste à avoir recours, pour la commande de la machine, à un système de vis et d'écrou entraîné par un moteur et associé au couteau mobile de la cisaille, le moteur précité pouvant suivant les cas être lié soit à une vis tournante coopérant avec un écrou fixe, soit à un écrou tournant coopérant avec une vis angulairement fixe.

Par rapport aux inconvénients cités plus haut, la cisaille mécanique suivant l'invention présente les avantages suivants :
a) un risque d'incendie pratiquement nul ;
b) une importante économie d'énergie, d'environ 40% compte tenu que la cisaille ne fonctionne à sa puissance électrique nominale qu'au moment précis de la coupe ;
c) aucun fluide oléodynamique n'étant nécessaire, il est inutile de prévoir un échangeur de chaleur, ce qui diminue la consommation d'énergie ; seule reste nécessaire l'huile de lubrification du coulisseau, cette huile étant d'ailleurs également présente dans les cisailles oléodynamiques ;
d) le niveau de bruit de la machine est réduit de plus de 35%, l'insonorisation totale de toute la machine étant facilement réalisable ;
e) l'encombrement de l'installation complète se trouve réduit de 75%,
f) les frais d'entretien de la machine s'avèrent également diminués, ce qui constitue un avantage important pour les coûts de fonctionnement.

L'invention sera décrite plus en détail ci-après en référence aux planches de dessins annexées sur lesquelles sont décrits certains modes de réalisation possibles de la cisaille mécanique objet de ladite invention.

Sur ces dessins :
La figure. 1 représente un premier mode de réalisation de la cisaille suivant l'invention, vue par l'avant en coupe ;
La figure. 2 est la coupe transversale selon la ligne II-II de la figure 1 ;
la figure 3 est la coupe verticale selon la ligne III-III de la figure 1 ;
la figure 4 représente la même coupe de la machine pour une deuxième position de travail ;
la figure 5 représente un deuxième mode de réalisation possible de la cisaille, toujours vue de face avec coupe partielle ;
la figure 6 représente la coupe le long de la ligne VI-VI de la figure 5 ;
la figure 7 correspond à la coupe le long de la ligne VII-VII de la figure 5 ;
la figure 8 montre la même coupe pour une deuxième position de travail, le sectionnement étant effectué ;
la figure 9 représente un troisième mode de réalisation possible de la cisaille mécanique suivant l'invention, vue de face, partiellement en coupe ;
la figure 10 est une coupe suivant la ligne X-X de la figure 9 ;
la figure 11 est la coupe verticale partielle selon la ligne XI-XI de la figure 9 ;
la figure 12 représente la même vue en coupe, la machine se trouvant à une deuxième position de travail, après le sectionnement.

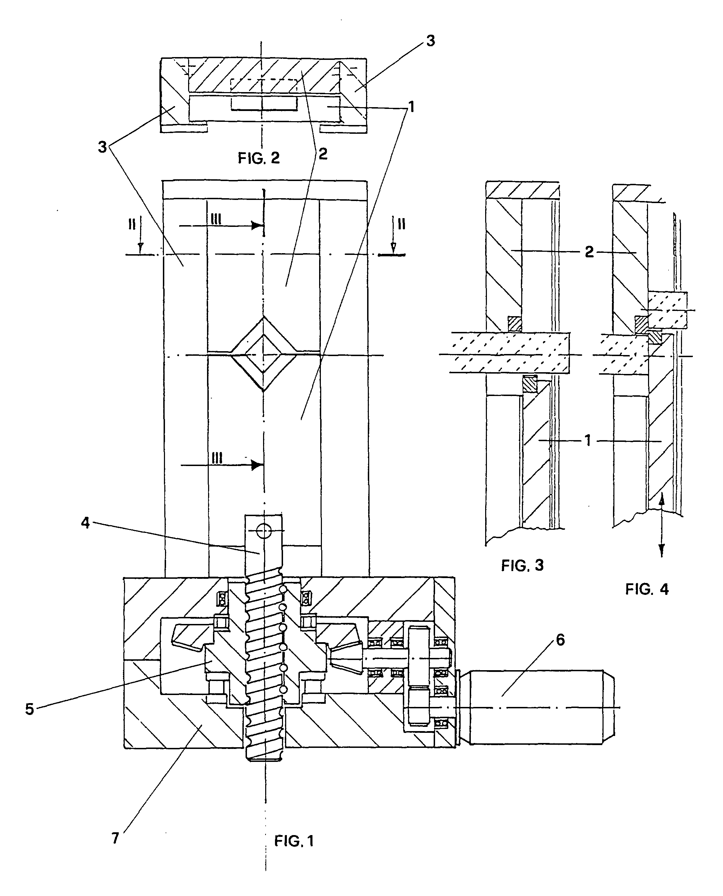

Dans l'exemple de réalisation représentée sur les figures 1 à 4, la cisaille comprend un coulisseau porte-couteau mobile 1 qui agit en contact avec une enclume porte-couteau 2, fixée aux montants 3 qui ont également pour fonction de maintenir le guidage du coulisseau 1.

Le mouvement de ce dernier est obtenu par la vis 4 fixée au porte-couteau 1 et déplacée en direction verticale par la rotation de l'écrou 5 dont le support est réalisé par un roulement à billes.

La commande de la rotation de l'écrou 5, par l'intermédiaire de la liaison mécanique comportant un accouplement conique suivi d'un accouplement par engrenages cylindriques, s'effectue par un moteur électrique de commande 6 fixé au carter 7 supportant le mécanisme à engrenages.

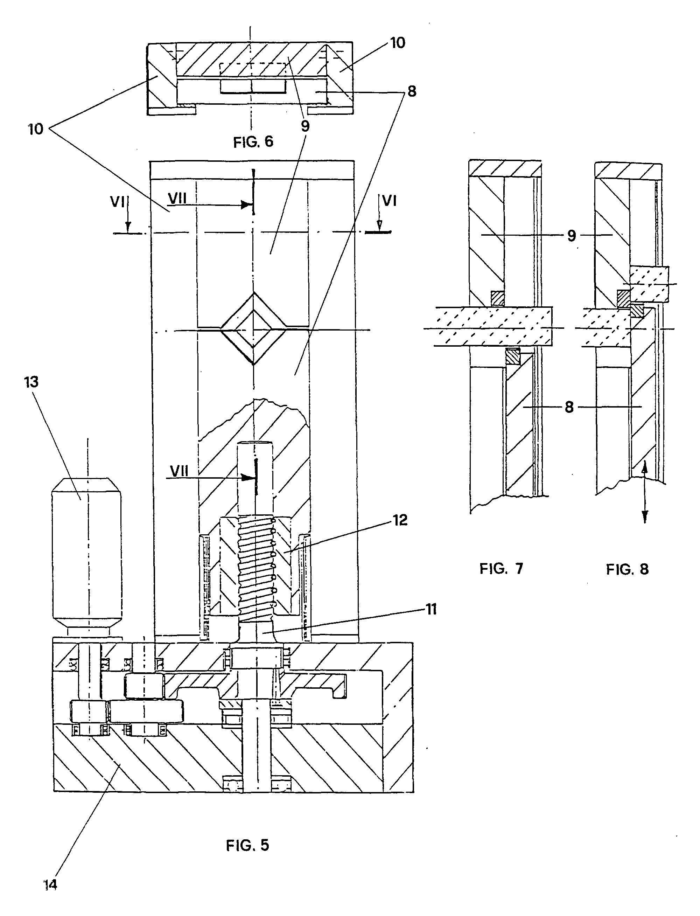

Dans le deuxième mode de réalisation illustré sur les figures 5 à 8, le coulisseau mobile portecouteau 8, mobile par rapport à l'enclume porte-couteau fixe 9 solidaire des montants 10, est mis en mouvement par la vis tournante 11, laquelle est mobile par rapport à l'écrou 12 fixé au porte-couteau 8 et est mise en rotation par le moteur électrique de commande 13 relié à la vis 11, par l'intermédiaire de deux paires d'engrenages cylindriques renfermés dans le carter 14.

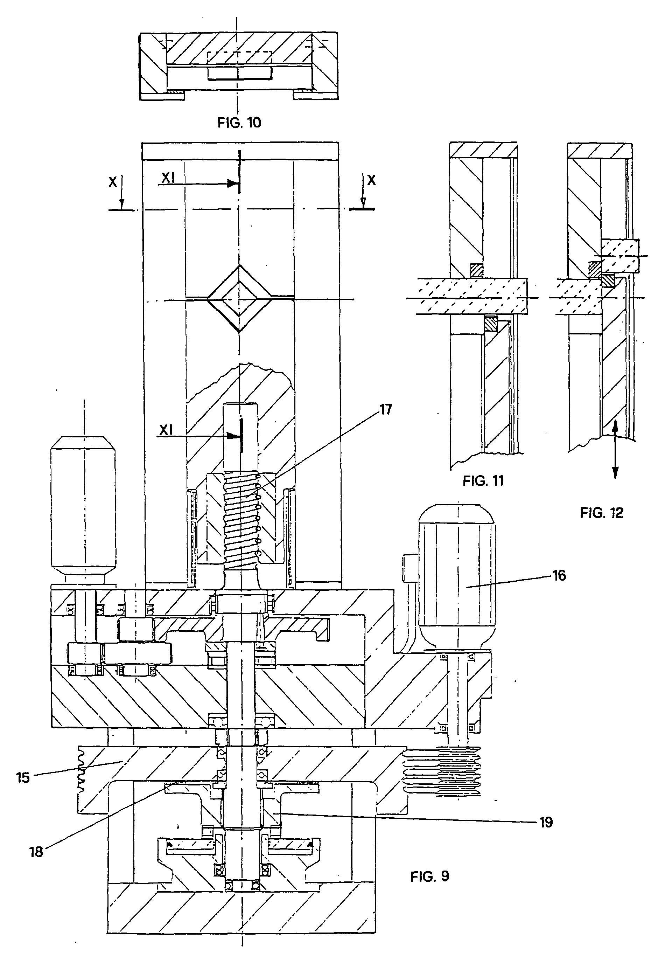

Dans le troisième mode de réalisation illustré sur les figures 9 à 12, la cisaille, de plus forte puissance, comprend un volant 15 mis en rotation par le moteur électrique 16 par l'intermédiaire d'une transmission à courroies, tandis que la vis 17 est mise en rotation par le volant 15 avec interposition de l'embrayage à friction 18 monté sur la cloche tournante 19, laquelle est reliée mécaniquement à la vis 17.

## Revendications

1. Cisaille mécanique pour la coupe à chaud de billettes ou barres métalliques, comprenant un couteau mobile (1;8) par rapport à un couteau fixe (2,9), **caractérisé en ce que** le mouvement du couteau mobile (1,8) est obtenu par le mouvement réciproque d'une système à vis (4,17) et écrou (5) dont le support entre la vis (4,17) et l'écrou (5) est réalisé avec une roulement à billes, le système étant entraîné par une moteur électrique (6) lié soit à la vis (17) tournant et coopérant avec l'écrou (5) fixe, ou bien lié à un écrou (5) tournant coopérant avec une vis (4) angulairement fixe, et avec interposition de moyens mécaniques de transmission.

2. Cisaille selon la revendication 1, **caractérisée en ce que** la vis (4) est fixée au couteau mobile (1) mis en mouvement par l'écrou (5), lequel est mis en rotation par le moteur électrique (6).

3. Cisaille selon la revendication 1, **caractérisée en ce que** la vis (11) destinée à impartir le mouvement au couteau mobile (8) est mise en rotation par le moteur électrique (13) pour venir se visser dans l'écrou (12), lequel est rendu solidaire dudit couteau mobile (8).

4. Cisaille selon la revendication 3, **caractérisée en ce qu'**un volant (15) est monté sur la vis tournante (17) mise en rotation par le moteur de commande (16) avec interposition d'un embrayage à friction (18 et 19), dans le but d'augmenter la puissance agissant sur la vis (17).

## Patentansprüche

1. Mechanische Schere zum warmen Schneiden von Metallbolzen oder -stäben, umfassend ein bewegliches Messer (1, 8) und ein zugeordnetes feststehendes Messer (2, 9), **dadurch gekennzeichnet, dass** der Antrieb des beweglichen Messers (1, 8) durch den reziproken Antrieb eines Schrauben- (4, 17) und Muttersystems (5) erreicht wird, wobei die Lagerung zwischen der Schraube (4, 17) und der Mutter (5) mittels eines Kugellagers realisiert ist und das System durch einen Elektromotor (6) angetrieben wird, welcher entweder mit der sich drehenden Schraube (17) verbunden ist, die mit der feststehenden Mutter (5) zusammenwirkt, oder mit der sich drehenden Mutter (5) verbunden ist, die mit einer winklig feststehenden Schraube (4) zusammenwirkt und durch Einsetzen mechanischer Transmissionsmittel.

2. Schere nach Anspruch 1, **dadurch gekennzeichnet, dass** die Schraube (4) an dem beweglichen Messer (1) befestigt ist, welches durch die Mutter (5) angetrieben wird, die durch den Elektromotor (6) in Drehung versetzt wird.

3. Schere nach Anspruch 1, **dadurch gekennzeichnet, dass** die Schraube (11), die das beweglichen Messer (8) antreiben soll, durch den Elektromotor (13) in Drehung versetzt wird, so dass sie sich in die Mutter (12) hineinschraubt, welche mit dem beweglichen Messer (8) fest verbunden ist.

4. Schere nach Anspruch 3, **dadurch gekennzeichnet, dass** ein Schwungrad (15) auf der drehenden Schraube (17) montiert ist, die durch den Steuermotor (16) in Drehung versetzt wird unter Zwischenschaltung einer Reibungskupplung (18 und 19), um die auf die Schraube (17) einwirkende Kraft zu erhöhen.

## Claims

1. Mechanical shears for hot cutting of metal bars or billets, comprising a blade (1; 8) which is mobile relative to a fixed blade (2, 9), **characterised in that** the movement of the mobile blade (1, 8) is obtained by the reciprocal motion of a system with a screw (4, 17) and nut (5), the support of which between the screw (4, 17) and the nut (5) is obtained by means of a roller bearing, the system being driven by an electric motor (6) which is connected either to the rotary screw (17) and co-operates with the fixed nut (5), or is connected to a rotary nut (5) which co-operates with a screw (4) which is angularly fixed, and with mechanical drive means interposed.

2. Shears according to claim 1, **characterised in that** the screw (4) is fixed to the mobile blade (1) which is moved by the nut (5), which is rotated by the electric motor (6).

3. Shears according to claim 1, **characterised in that** the screw (11) which is designed to impart motion to the mobile blade (8) is rotated by the electric motor (13) in order to be screwed into the nut (12), which is rendered integral with the said mobile blade (8).

4. Shears according to claim 3, **characterised in that** a fly wheel (15) is fitted onto the rotary screw (17) which is rotated by the control motor (16) with interposition of a friction clutch (18 and 19), for the purpose of increasing the power which acts on the screw (17).
